# EUROPEAN PATENT SPECIFICATION

(11) **EP 3 628 727 B1**
(45) Date of publication and mention of the grant of the patent: **18.11.2026**
(21) Application number: 18197234.0
(22) Date of filing: 27.09.2018
(51) Int. Cl.: C12C 11/00, C12H 1/22, C12C 7/22, C12C 13/00

(54) **CAPACITIVE CONVERTER AND METHOD FOR BREWING BEER**
KAPAZITIVER WANDLER UND VERFAHREN ZUM BRAUEN VON BIER
CONVERTISSEUR CAPACITIF ET PROCÉDÉ DE BRASSAGE DE BIÈRE

(43) Date of publication of application: 01.04.2020
(73) Proprietor: Lourenço, Antonio Pedro, São Paulo (BR)
(72) Inventor:
(74) Representative: Juncosa Miró, Jaime

(56) References cited:
- US-A- 2 025 243
- US-A- 3 625 843
- KOTOYOSHI NAKANISHI ET AL: "Effect of electric current on growth and alcohol production by yeast cells", JOURNAL OF FERMENTATION AND BIOENGINEERING, vol. 85, no. 2, 1 January 1998 (1998-01-01), pages 250 - 253, XP055182407, ISSN: 0922-338X, DOI: 10.1016/S0922-338X(97)86778-5
- SZOLLOSI ATTILA ET AL: "Production of low or non-alcoholic beer in microbial fuel cell", FOOD AND BIOPRODUCTS PROCESSING, INSTITUTION OF CHEMICAL ENGINEERS, RUGBY, GB, vol. 98, 25 January 2016 (2016-01-25), pages 196 - 200, XP029496329, ISSN: 0960-3085, DOI: 10.1016/J.FBP.2016.01.012

## Description

### Technical Field

This invention refers to a capacitive converter, and to a method, for brewing beer. The capacitive converter can be used during the three separate phases of the brewing beer process, namely: mashing; polysaccharides hydrolysis in fermentable and non-fermentable sugars; and fermentation, with the transformation of fermentable sugars into ethanol the maturation of the resulting beer, with a second fermentation stage and other important redox reactions, consisting of oxy-reduction reactions.

### Background of the Invention

As is known to persons versed in the art, brewing beer dates back thousands of years. Since then, innovations, improvements and inventions have ushered in changes to production processes and the types of beers brewed. However, beer is essentially brewed according to the same concepts, consisting of: preparation of the mash, fermentation and maturation. Aspects related to these three phases - which give rise to different beer types and varieties - involve physical, chemical and biochemical transformations of the mixture being processed, through chemical, enzymatic and biochemical reactions triggered by the actions of microorganisms.

During the mash preparation phase, which is a sugary liquid, specifically during the mashing stage, the polysaccharides (amylose and amylopectin) in the malt are converted into smaller glycides, maltose and glucose, by the action of enzymes such as α- and β-amylase, cellulose and α-glucosidase, as set forth in the appropriate heat-mass schedule, in the maintenance of the process, typical for each beer type.

Depending on the process temperature, polysaccharides are converted into fermentable sugars or non-fermentable sugary mixtures at above 40°C. Eventual enzyme action neutralization may be handled through warming the mash at a higher temperature of above 70°C. The mash is then drained, boiled with the addition of hops, clarified and cooled to fermentation temperature.

Fermentation, or the first fermentation, usually takes place in an anaerobic environment in another vessel or reactor, which may be of various types. The sugars are consumed by microorganisms such as yeasts, which will produce ethyl alcohol and carbon dioxide, among other byproducts at lower concentrations. Fermentation time depends on temperature, pH and the concentration of sugars and microorganisms, which is controlled by the desired alcohol content of the product. This time may vary from a few days to months, depending on the type of beer desired.

The first fermentation is followed by maturation, also known as the second fermentation or aging the beer, at a temperature lower than that used for the first fermentation. Depending on type, maturation may require a week to months. During this phase, in addition to chemical actions on the alcohol medium, the action of yeast with a low concentration of living cells and also avoiding the presence of dead microorganisms is intended for the process of re-absorbing secondary substances of products resulting from the first fermentation, such as some sulfur compounds.

After maturation, the beer may be clarified at a temperature even lower than that used for maturation, with clarification requiring full decantation of the yeast, consequently leading to a product that is ready to bottle.

Several initiatives have been developed for enhancing the productivity of the beer brewing process, with one of them to be mentioned addressing the use of light sources as a way of speeding up the beer mash fermentation process, for example, which will subsequently be transformed into beer or draft lager over a brief period of time. This technology shortens the brewing times by 15% to 20%, and leads to a proportional reduction in production costs due to higher production capacity was no loss in the quality of the end product.

US3625843 A relates to a method of and a device for treating disperse systems, preferably liquids, particularly beer, by changing the electric charge on the systems in that the disperse systems to be treated are subjected to direct-current fields produced by high-potential capacitors and impulse discharged between carbon electrodes, with the disperse systems under treatment acting as an electrolyte.

Scientific document "Effect of Electric Current on Growth and Alcohol Production by Yeast Cells" KOTOYOSHI NAKANISHI et al. discloses a system used for brewing a broth comprising sugars and yeasts used in beers, comprising a fermentor equipped with two Pt-electrodes. The electrodes can work either in DC or in AC.

Scientific document "Production of low or non-alcoholic beer in microbial fuel cell" SZOLLOSI ATTILA et al. describes a method for affecting the redox reactions during brewing of a beer, and the apparatus for making the same.

US2025243 A discloses a method and apparatus for preventing accumulation of foreign matter in or on beer handling equipment and for treating beer. The method comprises treating the beer with an electrical current via an electrode arrangement comprises an insulating covering and configured so as to apply an electrical current to the beer.

In addition to the solution described above, there may be other solutions describing fermentation processes that enhance beer brewing productivity. However, no attempt or search is known at the state of the art focused specifically on the action of capacitive energy fields in catalytic and fermentation processes, designed to enhance beer brewing productivity with higher yields.

### Description of the Invention

Embodiments of the present invention provide according to a first aspect a capacitive converter for brewing beer, that includes a capacitive element (it may include more than one), which in operation is in direct contact (for example via immersion) with a mixture (typically milled grain and water, known as 'liquor') to be processed. The capacitive element generates capacitive energy fields to be applied to the mixture, so providing additional energy for the redox reactions taking place during the beer brewing stages, namely: mashing, fermentation and maturation.

The capacitive element comprises armatures which may have a flat, cylindrical, coiled, geometrical or capacitive configuration, either fixed or movable. The armatures are constructed of corrosion-resistant electricity-conducting materials and comprise an anode and a cathode which optionally may be insulated through an insulation covering.

The armatures are spaced at a given distance between them and connected in parallel.

The generated capacitive energy fields may range between 20J/h.m³ to 500KJ/h.m³. In particular, it can range between 5KJ/h.m³ to 400KJ/h.m³ for the mashing stage, 0.5KJ/h.m³ to 150KJ/h.m³ for the fermentation stage and 20J/h.m³ to 120KJ/h.m³ for the maturation stage.

In another embodiment, the capacitive converter also includes charging means that may work with alternating current (AC), a direct current (DC), or pulsed direct current (PDC) at cycles in the 30Hz to 1,000 KHz range.

Embodiments of the present invention also provide according to a second aspect a method for brewing beer, comprising contacting at least one capacitive element with a mixture to be processed and applying, by the at least one capacitive element, capacitive energy fields to said mixture, such that additional energy for the redox reactions taking place during the beer brewing stages, namely: mashing, fermentation and maturation, is provided, the capacitive element comprising armatures having a flat, cylindrical, coiled, geometrical or capacitive configuration, either fixed or movable, said armatures being constructed of corrosion-resistant electricity-conducting materials and comprising an anode and a cathode; the anode or cathode being insulated through an insulating covering; and the armatures being spaced at a given distance between them and connected in parallel.

In particular, the contacting step comprises immersing the at least one capacitive element in the mixture.

In an embodiment, the at least one capacitive element is assembled on an insulating support installed on a reactor used during the beer brewing stages. The support can be installed on the lower, middle or upper part of the reactor.

### Brief Description of the Drawings

The previous and other advantages and features will be more fully understood from the following detailed description of embodiments, with reference to the attached figures, which must be considered in an illustrative and non-limiting manner, in which:
Fig. 1 schematically represents the front and perspective views of a capacitive converter with parallel flat armatures, with these armatures being fixed or movable, resulting in constant and variable capacitances.
Fig. 2 schematically represents the top and perspective views of a capacitive converter with concentric cylindrical armatures, with these armatures being fixed or movable, resulting in constant and variable capacitances.
Fig. 3 schematically represents the top and perspective views of a capacitive converter with concentric cylindrical armatures, with fixed armatures with offset areas.
Fig. 4 schematically represents the top and front views of a capacitive converter with spiral cylindrical armatures, with these armatures being fixed, with a single element in the form of a coil.

### Detailed Description of Preferred Embodiments

According to these illustrations, the capacitive converter for brewing beer addressed by this invention comprises the use of capacitive energy fields to be applied to the beer brewing process, more specifically through the use of a capacitive element or elements in direct contact with the mixture (typically milled grain and water, known as 'liquor') being processed, in order to provide additional energy for the redox reactions taking place during the three beer brewing stages, namely: mashing, fermentation and maturation.

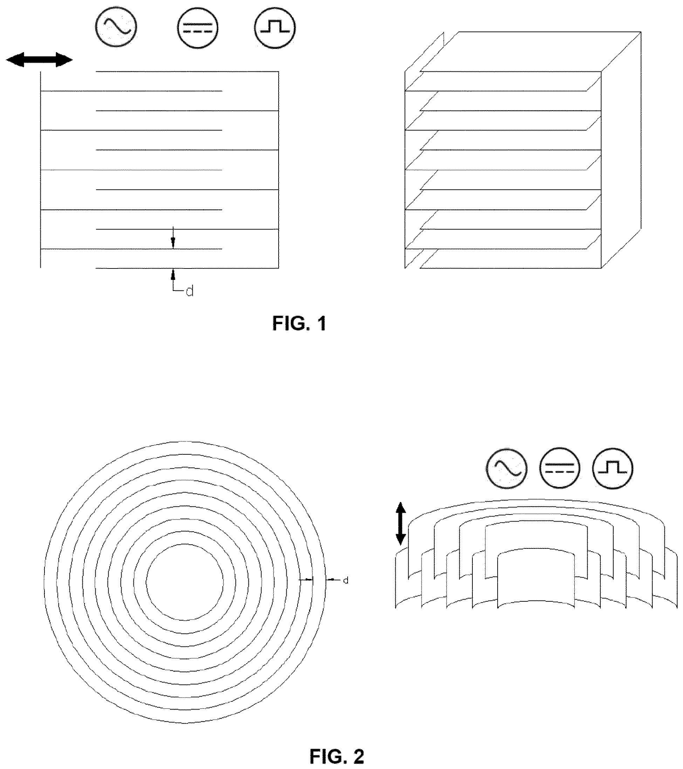

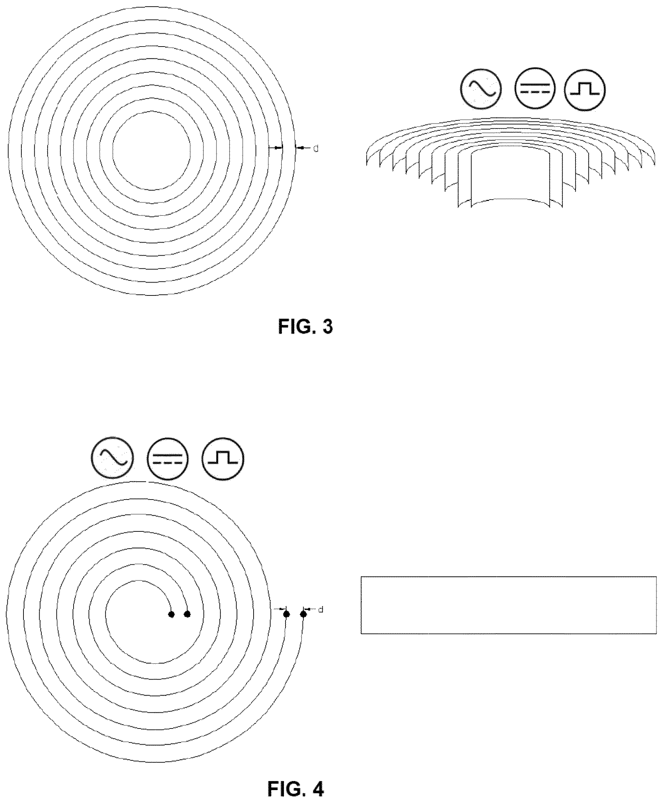

As shown in the above-mentioned illustrations, the assembled capacitive system is called an energy converter. In particular, the proposed capacitive converter operates when immersed in the liquor. The capacitive element(s) (see Figs. 1 to 4) consists of arrangements of armatures, with configurations that may be flat (Fig. 1), cylindrical (Figs. 2 and 3) or coiled (Fig. 4). Other configurations are also possible. The armatures can be either fixed or movable.

In an embodiment, the armatures are made from austenitic stainless steel and titanium. It should be noted that other corrosion-resistant materials that conduct electricity can also be used. The armatures may be insulated at its anode or cathode through an insulating coating. The liquor, homogenous or not, acts as a dielectric or electrolyte of the capacitive converter.

With multiple elements linked up in parallel, the capacitive element(s) are sized and designed for specific applications at the respective brewing stages, taking into account the physical, chemical and biological conditions that characterize each stage.

The capacitive energy delivered by the capacitive element may be dimensioned according to the following conditions: intended energy level as required for the transformation; capacitive element armatures; reactor diameter and volume at the respective brewing stage; temperature, extra- or intra-cellular redox reaction type (for primary or secondary fermentation); processing time; pH; electrical conductivity; and turbidity. In terms of the efficacy of their functions, the capacitive element(s) can provide to the mixture in reaction a capacitive energy between 20J/h.m³ and 500KJ/h.m³. More typically, of 5KJ/h.m³ to 400KJ/h.m³ (mashing), 0.5KJ/h.m³ to 150KJ/h.m³ (fermentation) and 20J/h.m³ to 120KJ/h.m³ (maturation).

The volume of the capacitive converter is taken as the mean of the sum of the dielectric or electrolyte volume, comprised of the armatures of each capacitive element constituting the capacitive converter.

For the necessary conceptual definition of the functions and parameters intervening in the functionality and operationality of the present invention, the energy rule for the capacitive converter that represents the capacitive energy supplied by the converter with (n) elements is ruled by the following expression: $E = α ∗ \left[{\sum }_{k = 1}^{n} {C}_{k} ∗ {V}_{k}^{2}\right] + λ$ where:
**E** = Energy delivered to the mixture during the brewing stage under way during a period of 1h **(one** hour), (J/h);
**α** = calibration constant dependent on the medium and the energy converter, determined empirically while processing at the respective stage;
**Cₖ=** Electrical Capacity of the Element (k), (F);
**Vₖ** = Voltage applied to the Element (k) in 1h (one hour), (V/h);
**λ** = Residual Energy dependent on the operating and construction conditions of the converter, determined empirically in 1h (one hour) of processing at the respective stage, (J/h);
n = Number of capacitive elements.

Moreover, the density of the capacitive energy delivered to the medium is defined through the following equation: ${E}_{u} = \frac{E}{u}$ where:
**E**ᵤ = Energy Density, (J/h.m³);
**E =** Energy delivered during the period of 1h (one hour), equation (1), (J/h);
**u =** Converter volume, between armatures, (m³).

The typical volume of the capacitive converter for each stage of the brewing process in which it is applied has specific construction characteristics that are closely related to the energy demands of the stage being processed, with characteristics that identify the energy density (Eᵤ) delivered to the medium, as shown below: $u = {\sum }_{k = 1}^{n} {A}_{k} ∗ {d}_{k}$ where:
**u** = Converter volume, between armatures, (m³);
**Aₖ** = Capacitive area of the element (k), (m²);
**dₖ** = Spacing between the armatures of the element (k), (m);
**n** = Number of capacitive elements.

The spacing between the armatures (d), which is one of the variables qualifying the capacitive element at the stage being processed, is an important parameter for sizing the capacitive converter. This parameter is a function of evenly balanced physical and chemical conditions for the mixture (homogeneous or heterogeneous) being processed, the type of redox reaction sought and the amount of capacitive energy required by the chemical and biochemical reactions typical of the stage.

It is noted that the electrical capacity (Cₖ) of an element is inversely dependent on the spacing (dₖ) between its armatures, in other words, with wider spacing between the armatures implying a reduction in the electrical capacity of the capacitive element (Cₖ).

The mass flow rate of the capacitive converter is also an important feature, and may be expressed through the following equation: ${φ}_{m} = \frac{\partial m}{\partial t . \partial s}$ where:
φₘ = Mass cross-flow rate through the armatures of the capacitive element (k), (kg/h.m²);
$\frac{\partial m}{\partial t . \partial s}$ = Quantity of mass cross-flowing through the capacitive element (k), by cross-area between the armatures (Perimeter of the armatures x Spacing dₖ) for 1h (one hour), (kg/h.m³).

Moreover, the importance of the granulometric quality of the ingredients must be stressed for heterogeneous mixtures. This characteristic directly influences the definition of the spacing (dₖ) in the capacitive element under consideration.

The operating system for the capacitive converter may be adopted under one of three power supply conditions: through a direct current (DC) circuit, an alternating current (AC), or a pulsating direct current (PDC), as shown by the reference symbols in the figures. When using AC or PDC cycles in the 30Hz to 1,000 KHz range may be used.

In an embodiment, the following assembly and installation of the capacitive converter is proposed. A set of capacitive elements is placed on insulating supports with a low-mass rigid housing. Such supports must offer minimal intervention in the natural convective flow of the mixture being processed. When assembled on the support that ensures the placement of the armatures, the capacitive converter is installed on the lower, middle or upper part of the reactor that is used at each stage of the process.

As an example, for top fermentation during the fermentation stage, the converter is installed on the upper part of the reactor where the top reactions occur, characterizing a type of beer. The capacitive converter is installed in a manner whereby the throughflow of the liquid being processed is aligned with the gaps between its armatures.

It should be noted that although the description defines the use of one capacitive converter, it must be understood that one or more capacitive converters may be installed at each stage of the beer brewing process, as required. It should also be noted that, although a specific use of the equipment is described, it may also be used for preparing cellulose and starch materials for scarification (similar to mashing) and for the fermentation of fermentable sugars in order to produce ethanol general use (e.g. spirits, wine and beer) as well as fuel.

The scope of the present invention is defined in the following set of claims.

## Claims

1. A capacitive converter for brewing beer, comprising at least one capacitive element, which in operation is in direct contact with a mixture to be processed, said capacitive element generating capacitive energy fields that are applied to said mixture during the beer brewing stages, namely: mashing, fermentation and maturation, providing additional energy for the redox reactions taking place, said capacitive element comprising armatures having a flat, cylindrical, coiled, geometrical or capacitive configuration, either fixed or movable, said armatures being constructed of corrosion-resistant electricity-conducting materials and comprising an anode and a cathode; said anode or cathode being insulated through an insulation covering; and the armatures being spaced at a given distance between them and connected in parallel.

2. The capacitive converter of claim 1, wherein said generated capacitive energy fields are controlled within the range of 20J/h.m³ to 500KJ/h.m³, and more specifically between 5KJ/h.m³ to 400KJ/h.m³ for the mashing stage, 0.5KJ/h.m³ to 150KJ/h.m³ for the fermentation stage and 20J/h.m³ to 120KJ/h.m³ for the maturation stage.

3. The capacitive converter of claim 1, further comprising charging means adapted and configured to work with an alternating current, AC, a direct current, DC, or a pulsed direct current, PDC, at cycles in the 30Hz to 1,000 KHz range.

4. A method for brewing beer, comprising:
contacting at least one capacitive element with a mixture to be processed; and
applying, by the at least one capacitive element, capacitive energy fields to said mixture during the beer brewing stages, namely: mashing, fermentation and maturation, such that additional energy for the redox reactions taking place is provided,
the capacitive element comprising armatures having a flat, cylindrical, coiled, geometrical or capacitive configuration, either fixed or movable, said armatures being constructed of corrosion-resistant electricity-conducting materials and comprising an anode and a cathode; the anode or cathode being insulated through an insulating covering; and the armatures being spaced at a given distance between them and connected in parallel.

5. The method of claim 4, wherein the contacting step comprises immersing the at least one capacitive element in the mixture.

6. The method of claim 4, wherein said generated capacitive energy fields range between 20J/h.m³ to 500KJ/h.m³, and more specifically between 5KJ/h.m³ to 400KJ/h.m³ for the mashing stage, 0.5KJ/h.m³ to 150KJ/h.m³ for the fermentation stage and 20J/h.m³ to 120KJ/h.m³ for the maturation stage

7. The method of claim 4, wherein the at least one capacitive element is assembled on an insulating support, said support being installed on a reactor used during the beer brewing stages.

## Patentansprüche

1. Kapazitiver Wandler zum Brauen von Bier, umfassend mindestens ein kapazitives Element, das im Betrieb in direktem Kontakt mit einem zu verarbeitenden Gemisch steht, wobei das kapazitive Element kapazitive Energiefelder erzeugt, die während der Bierbrauphasen auf das Gemisch aufgebracht werden, nämlich: Maischen, Gärung und Reifung, wobei zusätzliche Energie für die stattfindenden Redoxreaktionen bereitgestellt wird, wobei das kapazitive Element Anker mit einer flachen, zylindrischen, gewundenen, geometrischen oder kapazitiven Konfiguration umfasst, die entweder feststehend oder beweglich sind, wobei die Anker aus korrosionsbeständigen, elektrisch leitenden Materialien bestehen und eine Anode und eine Kathode umfassen; wobei die Anode oder Kathode durch eine Isolierabdeckung isoliert ist; und wobei die Anker in einer gegebenen Entfernung voneinander beabstandet und parallel geschaltet sind.

2. Kapazitiver Wandler nach Anspruch 1, wobei die erzeugten kapazitiven Energiefelder im Bereich von 20 J/h.m³ bis 500 kJ/h.m³ und insbesondere zwischen 5 kJ/h.m³ und 400 kJ/h.m³ für die Maischphase, von 0,5 kJ/h.m³ bis 150 kJ/h.m³ für die Gärungsphase und von 20 J/h.m³ bis 120 kJ/h.m³ für die Reifungsphase gesteuert werden.

3. Kapazitiver Wandler nach Anspruch 1, ferner umfassend Lademittel, die dazu angepasst und konfiguriert sind, mit einem Wechselstrom, AC, einem Gleichstrom, DC, oder einem gepulsten Gleichstrom, PDC, bei Frequenzen im Bereich von 30 Hz bis 1.000 kHz zu arbeiten.

4. Verfahren zum Brauen von Bier, umfassend:
Inkontaktbringen mindestens eines kapazitiven Elements mit einem zu verarbeitenden Gemisch; und
Aufbringen kapazitiver Energiefelder durch das mindestens eine kapazitive Element auf das Gemisch während der Bierbrauphasen, nämlich: Maischen, Gärung und Reifung, sodass zusätzliche Energie für die stattfindenden Redoxreaktionen bereitgestellt wird,
wobei das kapazitive Element Anker mit einer flachen, zylindrischen, gewundenen, geometrischen oder kapazitiven Konfiguration umfasst, die entweder feststehend oder beweglich sind, wobei die Anker aus korrosionsbeständigen, elektrisch leitenden Materialien bestehen und eine Anode und eine Kathode umfassen; wobei die Anode oder Kathode durch eine isolierende Abdeckung isoliert ist; und wobei die Anker in einer gegebenen Entfernung voneinander beabstandet und parallel geschaltet sind.

5. Verfahren nach Anspruch 4, wobei der Schritt des Inkontaktbringens das Eintauchen des mindestens einen kapazitiven Elements in das Gemisch umfasst.

6. Verfahren nach Anspruch 4, wobei die erzeugten kapazitiven Energiefelder im Bereich von 20 J/h.m³ bis 500 kJ/h.m³ und insbesondere von 5 kJ/h.m³ bis 400 kJ/h.m³ für die Maischphase, von 0,5 kJ/h.m³ bis 150 kJ/h.m³ für die Gärungsphase und von 20 J/h.m³ bis 120 kJ/h.m³ für die Reifungsphase liegen.

7. Verfahren nach Anspruch 4, wobei das mindestens eine kapazitive Element auf einem isolierenden Träger montiert ist, wobei der Träger an einem Reaktor angebracht ist, der während der Bierbrauphasen verwendet wird.

## Revendications

1. Convertisseur capacitif pour le brassage de bière, comprenant au moins un élément capacitif qui, en fonctionnement, est en contact direct avec un mélange à traiter, ledit élément capacitif générant des champs d'énergie capacitive qui sont appliqués audit mélange pendant les étapes de brassage de la bière, à savoir : l'empâtage, la fermentation et la maturation, fournissant ainsi une énergie supplémentaire aux réactions d'oxydoréduction qui se produisent, ledit élément capacitif comprenant des armatures présentant une configuration plane, cylindrique, enroulée, géométrique ou capacitive, fixes ou mobiles, lesdites armatures étant constituées de matériaux électroconducteurs résistants à la corrosion et comprenant une anode et une cathode ; ladite anode ou ladite cathode étant isolée au moyen d'un revêtement isolant ; et les armatures étant espacées l'une de l'autre d'une distance donnée et raccordées en parallèle.

2. Convertisseur capacitif selon la revendication 1, dans lequel lesdits champs d'énergie capacitive générés sont régulés dans la plage de 20 J/h·m³ à 500 kJ/h·m³, et plus spécifiquement de 5 kJ/h·m³ à 400 kJ/h·m³ pour l'étape d'empâtage, de 0,5 kJ/h·m³ à 150 kJ/h·m³ pour l'étape de fermentation et de 20 J/h·m³ à 120 kJ/h·m³ pour l'étape de maturation.

3. Convertisseur capacitif selon la revendication 1, comprenant en outre des moyens de charge adaptés et configurés pour fonctionner avec un courant alternatif, AC, un courant continu, DC, ou un courant continu pulsé, PDC, à des fréquences comprises dans la plage de 30 Hz à 1 000 kHz.

4. Procédé de brassage de bière, comprenant :
la mise en contact d'au moins un élément capacitif avec un mélange à traiter ; et
l'application, par l'au moins un élément capacitif, de champs d'énergie capacitive audit mélange pendant les étapes de brassage de la bière, à savoir : l'empâtage, la fermentation et la maturation, de manière à fournir une énergie supplémentaire aux réactions d'oxydoréduction qui se produisent,
l'élément capacitif comprenant des armatures présentant une configuration plane, cylindrique, enroulée, géométrique ou capacitive, fixes ou mobiles, lesdites armatures étant constituées de matériaux électroconducteurs résistants à la corrosion et comprenant une anode et une cathode ; l'anode ou la cathode étant isolée au moyen d'un revêtement isolant ; et les armatures étant espacées l'une de l'autre d'une distance donnée et raccordées en parallèle.

5. Procédé selon la revendication 4, dans lequel l'étape de mise en contact comprend l'immersion de l'au moins un élément capacitif dans le mélange.

6. Procédé selon la revendication 4, dans lequel lesdits champs d'énergie capacitive générés sont compris dans la plage de 20 J/h·m³ à 500 kJ/h·m³, et plus spécifiquement de 5 kJ/h·m³ à 400 kJ/h·m³ pour l'étape d'empâtage, de 0,5 kJ/h·m³ à 150 kJ/h·m³ pour l'étape de fermentation et de 20 J/h·m³ à 120 kJ/h·m³ pour l'étape de maturation.

7. Procédé selon la revendication 4, dans lequel l'au moins un élément capacitif est monté sur un support isolant, ledit support étant installé sur un réacteur utilisé pendant les étapes de brassage de la bière.
